# FASCICULE DE BREVET EUROPEEN

(11) **EP 0 442 933 B1**
(45) Date de publication et mention de la délivrance du brevet: **13.04.1994**
(21) Numéro de dépôt: 89912632.0
(22) Date de dépôt: 09.11.1989
(51) Int. Cl.: G09F 3/04, A01G 9/02

(54) **CONDITIONNEMENT POUR PLANTES AVEC DISPOSITIF D'IDENTIFICATION**
VERPACKUNG FÜR PFLANZEN MIT IDENTIFIKATIONSMITTEL
PACKAGING MEANS WITH AN IDENTIFICATION DEVICE FOR LIVE PLANTS

(30) Priorité: 09.11.1988 FR 8815061
(43) Date de publication de la demande: 28.08.1991
(73) Titulaire: MULLER, Pierre, F-54300 Luneville (FR); LEBOUEF, René, F-44190 Clisson (FR); CORBIER, Jacques, F-33320 Eysines (FR); SURET, Alain, F-33320 Eysines (FR)
(72) Inventeur: MULLER, Pierre, F-54300 Lunéville (FR); LEBOUEF, René, F-44190 Clisson (FR); CORBIER, Jacques, F-33320 Eysines (FR); SURET, Alain, F-33320 Eysines (FR)
(74) Mandataire: Dawidowicz, Armand
(86) Numéro de dépôt international: FR8900581
(87) Numéro de publication internationale: WO9005352

(56) Documents cités:
- AU-B- 553 710
- FR-A- 2 552 911
- FR-A- 2 563 356
- US-A- 4 631 861
- US-A- 4 662 107

## Description

L'invention concerne un conditionnement pour plantes avec dispositif d'identification.

La vente des plantes vivantes en pots, en particulier avec une ou plusieurs plantes dans un pot en matière synthétique, connaît un développement important. Il est usuel, pour la présentation de la plante, d'utiliser une étiquette munie par exemple d'une représentation de la plante et quelques indications sur sa culture.

Dans l'horticulture traditionnelle, une telle étiquette est enfoncée par une pointe dans la terre du contenant ou pot. Un tel procédé ne convient pas pour la vente en grande surface ou en libre-service, du fait de la grande facilité à enlever et subtiliser les étiquettes. La plante sans étiquette devient pratiquement invendable.

Il est donc souhaitable de rendre l'étiquette solidaire du contenant ou pot, de manière à rendre la disparition de l'étiquette, ou sa perte lors du transport, plus difficile.

On connaît (voir AU-B-553.710), une étiquette munie d'une pointe en forme de flèche et de moyens élastiques d'accrochage coopérant avec une fente du bord du pot pour s'opposer à l'arrachement de l'étiquette. L'étiquette connue doit avoir une certaine rigidité pour qu'une portion en constitue une languette élastique de retenue. De plus, la pose de cette étiquette est délicate puisqu'il faut que la languette élastique d'accrochage soit effacée pendant l'enfoncement de la pointe d'étiquette dans la fente du pot, mais soit écartée lorsqu'on tente d'extraire l'étiquette par traction vers le haut. Une telle étiquette connue ne se prête pas aux grandes séries du fait de sa fabrication compliquée et onéreuse, nécessitant des découpages et poinçonnages dans un matériau relativement rigide tel qu'une matière plastique, et également à cause du coût de sa pose.

La présente invention vise en conséquence à fournir un nouveau conditionnement pour plantes avec dispositif d'identification qui ne présente pas les inconvénients des dispositifs connus, et qui utilise en particulier une étiquette de fabrication économique et de pose facile et rapide.

A cet effet, l'invention a pour objet un conditionnement pour plantes vivantes du type comprenant un contenant ou pot muni d'au moins une fente au voisinage de son bord, ainsi qu'une étiquette d'identification munie d'une pointe inférieure destinée à traverser ladite fente, ladite pointe inférieure étant constituée par une portion inférieure de forme sensiblement triangulaire, séparée du reste de l'étiquette par deux encoches latérales, caractérisé en ce que la hauteur de ladite portion triangulaire perpendiculaire à un premier côté latéral de ladite portion triangulaire, est plus courte que la longueur de ladite fente, la base de ladite portion triangulaire ayant une longueur supérieure à celle de ladite fente, la distance entre les fonds desdites encoches étant inférieure à la longueur de la fente, et la distance entre le fond de l'encoche opposée audit premier côté latéral et le sommet de la portion triangulaire adjacent à l'autre encoche, est inférieure à la longueur de la fente.

Avec l'étiquette selon l'invention, l'introduction du début de la portion triangulaire se fait par une translation parallèle au premier côté latéral indiqué, suivie par au moins un pivotement et une translation.

Selon une forme de réalisation préférée, le côté de l'encoche opposée audit premier côté latéral, lequel côté d'encoche est adjacent à la dite portion triangulaire, est sensiblement parallèle audit premier côté latéral.

Avec l'étiquette selon la forme de réalisation préférée de l'invention, la pointe peut être introduite dans la fente du contenant ou pot par inclinaison de l'étiquette de telle manière que le côté de la portion triangulaire qui est parallèle à un côté de l'encoche opposé, soit sensiblement perpendiculaire à la fente, puis translation vers le bas de l'étiquette de manière que la portion triangulaire traverse entièrement l'encoche. Il suffit de faire ensuite pivoter l'étiquette pour la ramener en position perpendiculaire à la fente pour que la base de la portion triangulaire empêche l'extraction de l'étiquette par une traction vers le haut, du fait que la longueur de cette base est supérieure à la longueur de la fente.

La pose de l'étiquette peut également se faire par translation oblique de l'étiquette, parallèlement aux côtés parallèles de la portion triangulaire et de l'encoche, suivie d'une rotation de l'étiquette.

L'étiquette selon l'invention est de fabrication simple, donc économique, puisqu'elle ne nécessite pas de matériau particulièrement rigide et est fabriquée par une seule opération de découpe. Sa pose est extrêmement simple et rapide, ce qui rend possible son utilisation pour la vente en grande surface ou en libre-service.

L'invention sera bien comprise à la lecture de la description suivante faite en se référant au dessin annexé dans lequel:

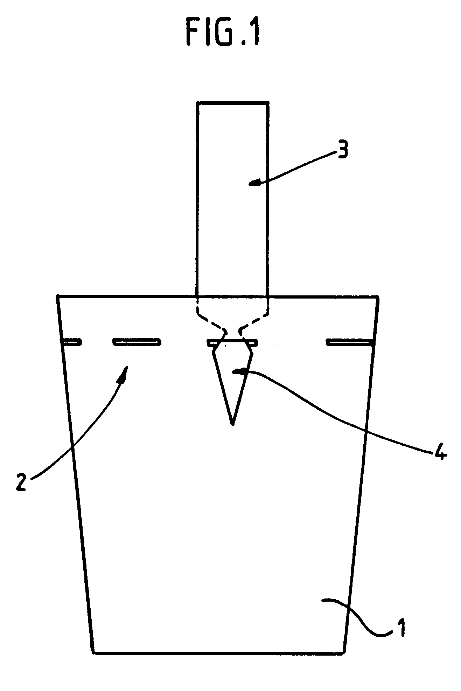

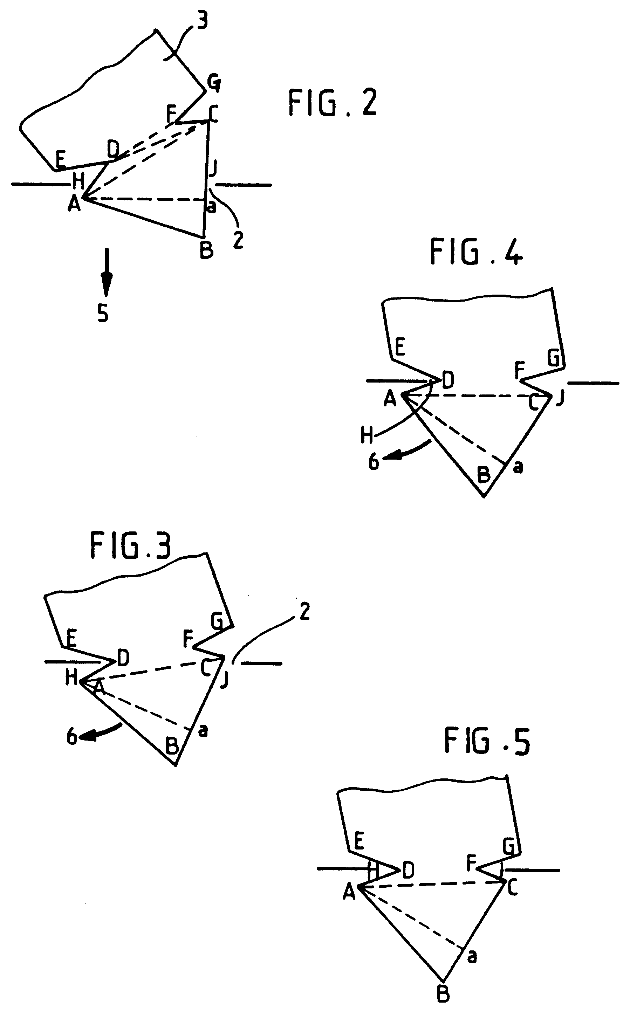

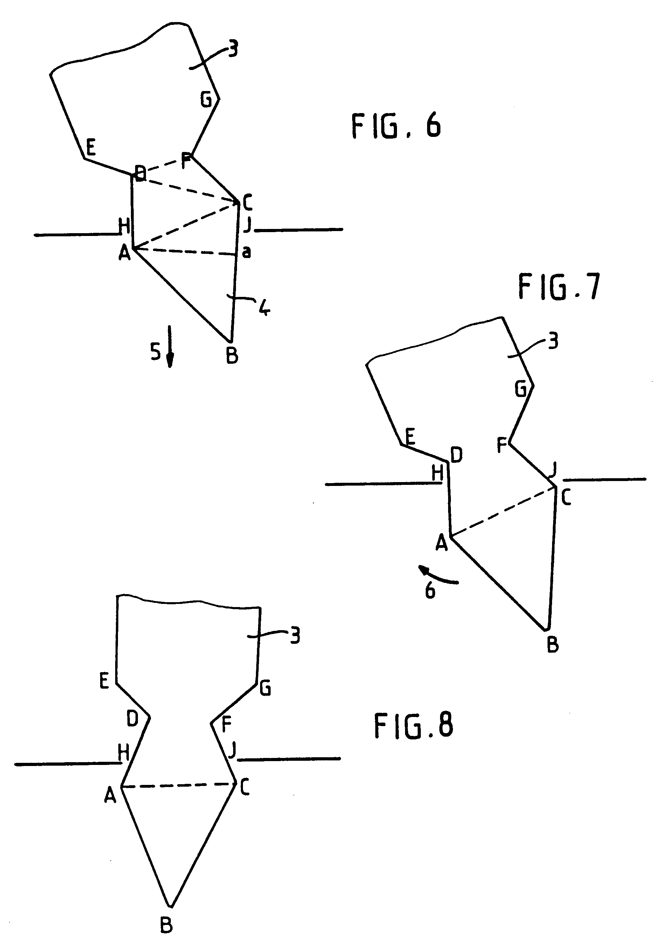

La figure 1 est une vue schématique en élévation d'un conditionnement selon l'invention; la figure 2 est un schéma illustrant le début du montage d'une étiquette, pour un exemple de réalisation de l'invention; les figures 3,4,5 sont analogues à la figure 2,pour des phases successives du montage; la figure 6 est analogue à la figure 2, pour une variante de réalisation de l'invention, et les figures 7 et 8 sont analogues à la figure 6, pour des phases successives du montage.

Le schéma de la figure 1 illustre le concept général de l'invention. Un contenant ou pot 1, destiné à recevoir une ou plusieurs plantes plantées en terre (non représentées) est muni au voisinage de son bord supérieur, de fentes 2 destinées à recevoir une étiquette 3 munie d'une pointe inférieure 4 ressortant à l'extérieur du pot 1 par la fente 2. L'invention consiste à donner a l'étiquette 3, et plus particulièrement à sa pointe inférieure 4, des formes et dimensions permettant le passage de la pointe 4 à travers la fente 2 et le verrouillage de l'étiquette après ce passage.

A cet effet, la pointe inférieure 4 comprend une portion inférieure triangulaire ABC raccordée au corps de l'étiquette 3 par deux encoches latérales ADE et CFG. La fente 2 du pot 1 a une longueur HJ.

Conformément à l'invention, la pointe inférieure 4 de l'étiquette 3 possède les trois caractéristiques suivantes:
a) la base AC de la portion triangulaire ABC a une longueur supérieure à la longueur HJ de la fente 2.
b) la distance DF entre les fonds D et F des encoches ADE et CFG est inférieure à la longueur HJ de la fente 2.
c) la longueur d'une hauteur Aa, perpendiculaire au premier côté latéral BC, est inférieure à la longueur HJ de la fente 2.
d) la distance DC entre le fond de l'encoche EDA, opposée au premier côté latéral BC, et le sommet C, adjacent à l'autre encoche CFG, est inférieure à la longueur HJ de la fente 2.

En conséquence, la portion triangulaire de la pointe 4 peut être partiellement introduite dans la fente HJ par une translation parallèle au côté BC, par exemple orthogonale à la HJ tel qu'indiqué par la flèche 5 à la figure 2. En faisant suivre la translation 5 par une rotation selon la flèche 6 (figure 3) on amène le bord H de la fente HJ au voisinage du fond D de l'encoche ADE. En continuant le pivotement, le point C peut traverser la fente HJ (figure 4) du fait de la relation DC < HJ. En ramenant ensuite l'étiquette en position centrée (figure 5), la base BC de la portion triangulaire ABC, plus longue que la fente HJ, empêche l'extraction de l'étiquette 3 par traction vers le haut.

Dans la variante de réalisation préférée des figures 6 à 8, le côté AD de l'encoche ADE qui est opposée au premier côté latéral BC, lequel côté AD est adjacent à la portion triangulaire ABC, est parallèle au premier côté latéral BC.

Comme on peut le voir aisément sur le dessin, cette caractéristique complémentaire permet d'introduire, par une translation 5 parallèle au côté BC (orthogonale à la fente HJ dans l'exemple de la figure 6), la totalité de la portion triangulaire ABC à travers la fente HJ (figure 7). Une simple rotation 6 amène à la position de verrouillage (figure 8).

## Revendications

1. Un conditionnement pour plantes vivantes du type comprenant un contenant ou pot (1) muni d'au moins une fente (2) au voisinage de son bord, ainsi qu'une étiquette d'identification (3) munie d'une pointe inférieure (4) destinée à traverser ladite fente (2), ladite pointe inférieure (4) étant constituée par une portion inférieure de forme sensiblement triangulaire (ABC), séparée du reste de l'étiquette (3) par deux encoches latérales (ADE, CFG), caractérisé en ce que la hauteur (Aa) de ladite portion triangulaire (ABC) perpendiculaire à un premier côté latéral (BC) de ladite portion triangulaire (ABC) est plus courte que la longueur (HJ) de ladite fente (2), la base (AC) de ladite portion triangulaire (ABC) ayant une longueur supérieure à celle de ladite fente (2), la distance (DF) entre les fonds desdites encoches (ADE, CFG) étant inférieure à la longueur (HJ) de la fente (2), et la distance (DC) entre le fond de l'encoche (ADE) opposée audit premier côté latéral (BC) et le sommet (C) de la portion triangulaire (ABC) adjacent à l'autre encoche (CFG), est inférieure à la longueur (HJ) de la fente (2).

2. Un conditionnement selon la revendication 1, caractérisé en ce que le côté (AD) de l'encoche (ADE) opposée audit premier côté latéral (BC), lequel côté d'encoche (AD) est adjacent à la dite portion triangulaire (ABC), est sensiblement parallèle audit premier côté latéral (BC).

## Claims

1. A package for live plants of the type comprising a container or pot (1) provided with at least one slot (2) in the vicinity of its edge, as well as an identification label (3) provided with a lower point (4) designed to traverse said slot (2), said lower point (4) consisting of a lower portion of substantially triangular shape (ABC) separated from the remainder of the label (3) by two lateral notches (ADE, CFG), characterised in that the height (Aa) of said triangular portion (ABC) perpendicular to a first lateral side (BC) of said triangular portion (ABC) is shorter than the length (HJ) of said slot (2), the base (AC) of said triangular portion (ABC) having a length greater than that of said slot (2), the distance (DF) between the bottoms of said notches (ADE, CFG) being smaller than the length (HJ) of the slot (2), and the distance (DC) between the bottom of the notch (ADE) opposite said first lateral side (BC) and the apex (C) of the triangular portion (ABC) adjacent to the other notch (CFG) is smaller than the length (HJ) of the slot (2).

2. A package according to claim 1, characterised in that the side (AD) of the notch (ADE) opposite said first lateral side (BC), which notch (AD) side is adjacent to said triangular portion (ABC), is substantially parallel to said first lateral side (BC).

## Patentansprüche

1. Verpackung für lebende Pflanzen, enthaltend einen Behälter oder Topf (1), versehen mit wenigstens einem Schlitz (2) in Nähe seines Randes, sowie ein Identifikationsetikett (3), versehen mit einer unteren Spitze (4), die dazu bestimmt ist, durch den genannten Schlitz (2) hindurchzutreten, wobei die genannte untere Spitze (4) aus einem unteren, im wesentlichen dreieckigen Teil (ABC) besteht, der vom Rest des Etiketts (3) durch zwei seitliche Einschnitte (ADE, CFG) getrennt ist, **dadurch gekennzeichnet,** daß die Höhe (Aa) des genannten dreieckigen Teils (ABC), die lotrecht zu einer ersten Seite (BC) des genannten dreieckigen Teils (ABC) verläuft, kürzer ist als die Länge (HJ) des genannten Schlitzes (2), wobei die Basis (AC) des genannten dreieckigen Teils (ABC) eine größere Länge hat als der genannte Schlitz (2), während der Abstand (DF) zwischen den Böden der genannten Einschnitte (ADE, CFG) kleiner ist als die Länge (HJ) des Schlitzes (2) und daß der Abstand (DC) zwischen dem Boden des Einschnitts (ADE), der der genannten ersten Seite (BC) gegenüberliegt, und dem Scheitel (C) des dreieckigen Teils (ABC) an dem anderen Einschnitt (CFG) kleiner ist als die Länge (HJ) des Schlitzes (2).

2. Verpackung nach Anspruch 1, **dadurch gekennzeichnet,** daß die Seite (AD) des der genannten ersten Seite (BC) gegenüberliegenden Einschnitts (ADE), die an den genannten dreieckigen Teil (ABC) angrenzt, im wesentlichen parallel zur genannten ersten Seite (BC) verläuft.
